# EUROPEAN PATENT SPECIFICATION

(11) **EP 2 829 772 B1**
(45) Date of publication and mention of the grant of the patent: **07.11.2018**
(21) Application number: 14178532.9
(22) Date of filing: 25.07.2014
(51) Int. Cl.: F16H 59/68, F16H 63/30

(54) **Travel transmission apparatus**
Bewegungsübertragungsvorrichtung
Dispositif de transmission de mouvement

(30) Priority: 26.07.2013 JP 2013155593
(43) Date of publication of application: 28.01.2015
(73) Proprietor: AISIN AI Co., Ltd., Nishio-shi, Aichi 445-0006 (JP)
(72) Inventor: Maruyama, Tetsuya, Nishio-shi, Aichi (JP)
(74) Representative: Grünecker Patent- und Rechtsanwälte PartG mbB

(56) References cited:
- EP-A1- 1 350 991
- EP-A2- 1 152 174
- FR-A1- 2 904 395

## Description

### Technical Field

The present invention relates to a travel transmission apparatus according to the preamble of claim 1, as it is known from the prior art document FR 2 904 395 A1. Such travel transmission apparatus uses a neutral detection switch to detect a neutral state of a gear change mechanism. Related travel transmission apparatuses are known from the prior art documents EP 1 152 174 A2 and EP 1 350 991 A1.

### Background Art

Travel transmission apparatuses that use a neutral detection switch to detect a neutral state of a gear change mechanism are publicly known (see, for example, Patent Literature 1). Such a travel transmission apparatus includes a cam-like member and the neutral detection switch of a push-button type. The cam-like member is turned in conjunction with gear change operation of the gear change mechanism. The neutral detection switch of a push-button type allows a detection body to advance/retreat so that ON/OFF operation is performed to thereby detect the neutral state of the gear change mechanism. The cam-like member has a contact edge formed to be in contact with the detection body so that the detection body is operated to advance/retreat when the cam-like member is turned. The contact edge is shaped to cause the detection body of the neutral detection switch to perform detection operation when the gear change mechanism is switched to neutral.

### Citation List

### Patent Literature

Patent Literature 1: JP 2006-138345 A (Figs. 2 and 4)

### Summary of Invention

### Technical Problem

In the travel transmission apparatus described in Patent Literature 1, the contact edge is formed like a gentle arc that protrudes toward the retreat side of the detection body. When the gear change mechanism is switched to neutral, the detection body of the neutral detection switch is operated to retreat, thereby detecting the neutral state of the gear change mechanism. The detection body, however, may perform the detection operation when the detection body is in contact with an area of the contact edge other than where the contact edge protrudes the most toward the retreat side, resulting in low detection accuracy. Thus, precise neutral detection may not be provided.

In the field of travel transmission apparatuses that use a neutral detection switch to detect the neutral state of a gear change mechanism, it is an object of this invention to provide a travel transmission apparatus with improved accuracy of the neutral detection by the neutral detection switch.

### Solution to Problem

To solve the above identified problem, the invention provides the travel transmission apparatus according to claim 1. A travel transmission apparatus disclosed herein uses a neutral detection switch to detect a neutral state of a gear change mechanism, the apparatus including: a cam-like member configured to be turned in conjunction with gear change operation of the gear change mechanism; and the neutral detection switch configured to be of a push-button type and to allow a detection body to advance/retreat so that ON/OFF operation is performed to detect the neutral state of the gear change mechanism, the cam-like member having a contact edge formed to be in contact with the detection body so that the detection body is operated to advance/retreat when the cam-like member is turned, and the contact edge having an advance operation portion rendered recessed in a wedge shape at a side of the advancing so that the detection body of the neutral detection switch is operated to advance to come into contact with the advance operation portion when the gear change mechanism is switched to neutral.

In the configuration described above, the advance operation portion rendered recessed in the wedge shape at the side of the advancing of the detection body allows the detection body to perform precise detection operation, providing improved accuracy of the neutral detection by the neutral detection switch.

Portions of the contact edge other than the advance operation portion may be retreat operation portions shaped like an arc with a center at a turning pivot of the cam-like member so that the detection body of the neutral detection switch comes in contact with any one of the retreat operation portions when the detection body is retreated.

A connection portion between any of the retreat operation portions and the advance operation portion may be rounded.

The cam-like member may be shaped like a plate protruding outward radially from a turning shaft thereof and that the cam-like member having a plate-like shape may be shaped to have a radially outer width larger than a radially inner width.

The detection body of the neutral detection switch may have a distal end shaped like a hemisphere fitted in the wedge-shaped advance operation portion.

The turning shaft of the cam-like member may be a select-and-shift shaft that turns about an axis thereof to allow the gear change mechanism to perform the gear change operation and moves in an axial direction to perform selecting operation in which a shift fork to be engaged is selected.

### Advantageous Effects of Invention

The advance operation portion rendered recessed in the wedge shape at the side of the advancing of the detection body allows the detection body to perform precise detection operation, providing improved accuracy of the neutral detection by the neutral detection switch.

### Brief Description of Drawings

Fig. 1 is a power transmission system diagram for a travel transmission apparatus to which the invention is applied.
Fig. 2 is a perspective view of shift members.
Fig. 3 is a plan view for describing a configuration of a shift lever.
Fig. 4 is a partial sectional view for describing a configuration of a gear switch mechanism observed in a shifting direction.
Fig. 5 is a partial sectional view for describing the configuration of the gear switch mechanism observed from a side orthogonal to the shifting direction.
Fig. 6 is a diagram for describing a configuration of a neutral detection switch.
Fig. 7 is a diagram of a configuration of a main portion of Fig. 6.
Fig. 8 is a characteristic graph of a cam member to which the invention is applied, in comparison with a conventional and publicly known protruding cam member.
Fig. 9A is a block diagram of a control unit installed in a four wheel vehicle to which the invention is applied, and Fig. 9B is a flowchart of processing of the control unit.

### Description of Embodiments

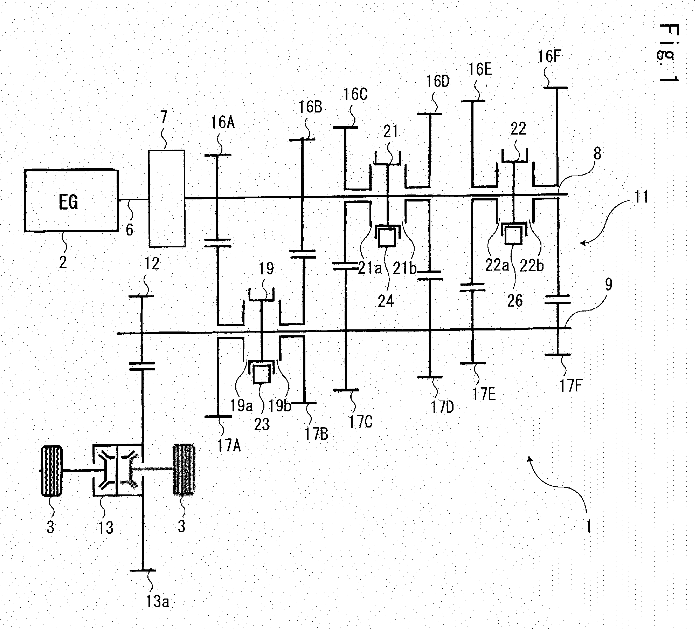

Fig. 1 is a power transmission system diagram of a travel transmission apparatus according to the invention. A travel transmission apparatus 1 illustrated in this diagram changes the speed of power generated by an engine 2 and transmits the power to a left-and-right pair of drive wheels 3 and 3. The left-and-right pair of drive wheels 3 and 3 are a left-and-right pair of front wheels of a four wheel vehicle in an example illustrated in this diagram.

The travel transmission apparatus 1 includes a main shaft 8, a countershaft 9, and a travel gear change mechanism (a gear change mechanism) 11. The power of the engine 2 is output to a crankshaft 6, which is an engine output shaft. The power is then transmitted from the crankshaft 6 through a main clutch 7 in a manner that allows disconnection to the main shaft 8, which is an input shaft coaxial with the crankshaft 6. The countershaft 9 is an output shaft arranged in parallel with the main shaft 8. The travel gear change mechanism 11, which is provided between the countershaft 9 and the main shaft 8, changes the speed of the power of the main shaft 8 and transmits the power to the countershaft 9.

The countershaft 9 is provided with a drive gear 12 that rotates in synchronization (or rotates in combination, to be specific) with the countershaft 9. The rotating power of the drive gear 12 is transmitted to a ring gear 13a of a differential 13 and then the power transmitted to the ring gear 13a is transmitted to the right and left drive wheels 3 and 3 through the differential 13.

The main clutch 7, when connected, allows the power to be transmitted from the crankshaft 6 to the main shaft 8, whereas, when disconnected, it interrupts the transmission of the power from the crankshaft 6 to the main shaft 8.

The travel gear change mechanism 11 includes a first input gear 16A and a second input gear 16B provided so as to rotate in synchronization (or rotates in combination, to be specific) with the main shaft 8, a third input gear 16C and a fourth input gear 16D supported through an undepicted bearing or the like on the main shaft 8 in a manner that allows relative rotation (or in a manner that allows idling, to be specific), a fifth input gear 16E and a sixth input gear 16F supported through an undepicted bearing or the like on the main shaft 8 in a manner that allows relative rotation (or in a manner that allows idling, to be specific), a first output gear 17A and a second output gear 17B supported through an undepicted bearing or the like on the countershaft 9 in a manner that allows relative rotation (or in a manner that allows idling, to be specific), a third output gear 17C and a fourth output gear 17D provided so as to rotate in synchronization (or rotates in combination, to be specific) with the countershaft 9, and a fifth output gear 17E and a sixth output gear 17F provided so as to rotate in synchronization (or rotates in combination, to be specific) with the countershaft 9.

The first to sixth input gears 16A, 16B, 16C, 16D, 16E, and 16F are arranged in the order set forth in an axial direction (a shifting direction) of the main shaft 8 toward one side (toward the right in Fig. 1, which will be referred to as a "high speed side" herein). The input gears 16A, 16B, 16C, 16D, 16E, and 16F increase in diameter and the number of teeth as they are located more toward the high speed side. The right side in Fig. 1 is the high speed side as described above.

The first to sixth output gears 17A, 17B, 17C, 17D, 17E, and 17F are arranged in the order set forth in the shifting direction toward the high speed side. The output gears 17A, 17B, 17C, 17D, 17E, and 17F decrease in diameter and the number of teeth as they are located more toward the high speed side.

The first input gear 16A and the first output gear 17A coincide with each other at a position in the shifting direction to be in constant mesh. The second input gear 16B and the second output gear 17B coincide with each other at a position in the shifting direction to be in constant mesh. The third input gear 16C and the third output gear 17C coincide with each other at a position in the shifting direction to be in constant mesh. The fourth input gear 16D and the fourth output gear 17D coincide with each other at a position in the shifting direction to be in constant mesh. The fifth input gear 16E and the fifth output gear 17E coincide with each other at a position in the shifting direction to be in constant mesh. The sixth input gear 16F and the sixth output gear 17F coincide with each other at a position in the shifting direction to be in constant mesh.

Furthermore, the travel gear change mechanism 11 is provided with a low-speed-side sleeve 19, a medium-speed-side sleeve 21, and a high-speed-side sleeve 22. The low-speed-side sleeve 19 is a synchronous mesh-type clutch arranged on the countershaft 9 between the first output gear 17A and the second output gear 17B. The medium-speed-side sleeve 21 is a synchronous mesh-type clutch arranged on the main shaft 8 between the third input gear 16C and the fourth input gear 16D. The high-speed-side sleeve 22 is a synchronous mesh-type clutch arranged on the main shaft 8 between the fifth input gear 16E and the sixth input gear 16F.

The low-speed-side sleeve 19 is configured to be able to slide in an axial direction of the countershaft 9, which is the shifting direction, and rotate in synchronization (or rotate in combination, to be specific) with the countershaft 9.

With the low-speed-side sleeve 19 operated to slide in the shifting direction toward the low speed side, the first output gear 17A and the low-speed-side sleeve 19 are synchronized by a synchronizing means 19a provided therebetween to come into mesh with each other. When the first output gear 17A and the low-speed-side sleeve 19 are in complete mesh, a state (a first state) is achieved in which the first output gear 17A, together with the low-speed-side sleeve 19, rotates in synchronization (or rotates in combination, to be specific) with the countershaft 9.

With the low-speed-side sleeve 19 operated to slide in the shifting direction toward the high speed side, the second output gear 17B and the low-speed-side sleeve 19 are synchronized by a synchronizing means 19b provided therebetween to come into mesh with each other. When the second output gear 17B and the low-speed-side sleeve 19 are in complete mesh, a state (a second state) is achieved in which the second output gear 17B, together with the low-speed-side sleeve 19, rotates in synchronization (or rotates in combination, to be specific) with the countershaft 9.

The medium-speed-side sleeve 21 is configured to be able to slide in the axial direction of the main shaft 8, which is the shifting direction, and rotate in synchronization (or rotate in combination, to be specific) with the main shaft 8.

With the medium-speed-side sleeve 21 operated to slide in the shifting direction toward the low speed side, the third input gear 16C and the medium-speed-side sleeve 21 are synchronized by a synchronizing means 21a provided therebetween to come into mesh with each other. When the third input gear 16C and the medium-speed-side sleeve 21 are in complete mesh, a state (a third state) is achieved in which the third input gear 16C, together with the medium-speed-side sleeve 21, rotates in synchronization (or rotates in combination, to be specific) with the main shaft 8.

With the medium-speed-side sleeve 21 operated to slide in the shifting direction toward the high speed side, the fourth input gear 16D and the medium-speed-side sleeve 21 are synchronized by a synchronizing means 21b provided therebetween to come into mesh with each other. When the fourth input gear 16D and the medium-speed-side sleeve 21 are in complete mesh, a state (a fourth state) is achieved in which the fourth input gear 16D, together with the medium-speed-side sleeve 21, rotates in synchronization (or rotates in combination, to be specific) with the main shaft 8.

The high-speed-side sleeve 22 is configured to be able to slide in the axial direction of the main shaft 8, which is the shifting direction, and rotate in synchronization (or rotate in combination, to be specific) with the main shaft 8.

With the high-speed-side sleeve 22 operated to slide in the shifting direction toward the low speed side, the fifth input gear 16E and the high-speed-side sleeve 22 are synchronized by a synchronizing means 22a provided therebetween to come into mesh with each other. When the fifth input gear 16E and the high-speed-side sleeve 22 are in complete mesh, a state (a fifth state) is achieved in which the fifth input gear 16E, together with the high-speed-side sleeve 22, rotates in synchronization (or rotates in combination, to be specific) with the main shaft 8.

With the high-speed-side sleeve 22 operated to slide in the shifting direction toward the high speed side, the sixth input gear 16F and the high-speed-side sleeve 22 are synchronized by a synchronizing means 22b provided therebetween to come into mesh with each other. When the sixth input gear 16F and the high-speed-side sleeve 22 are in complete mesh, a state (a sixth state) is achieved in which the sixth input gear 16F, together with the high-speed-side sleeve 22, rotates in synchronization (or rotates in combination, to be specific) with the main shaft 8.

The rotating speed of the power transmitted from the main shaft 8 to the countershaft 9 is set higher in the order from the first state, the second state, the third state, the fourth state, the fifth state, and then to the sixth state as a function of the numbers of teeth and the diameters of the first to sixth input gears 16A, 16B, 16C, 16D, 16E, and 17F and the first to sixth output gears 17A, 17B, 17C, 17D, 17E, and 17F. With this setting, the travel transmission apparatus 1 is configured to allow for switching of six travel gear ratio in total for forward travel. The forward travel power that has undergone the travel gear ratio change in this manner is transmitted to the drive wheels 3. The travel transmission apparatus 1 is also provided with a reverse rotation transmission mechanism, not shown, that transmits a reverse rotating power for reverse travel from the main shaft 8 through the countershaft 9 to the drive wheels 3.

In other words, the travel transmission apparatus 1 is in a neutral state or in a power transmission state. In the neutral state, all the three sleeves 19, 21, and 22 are located in their neutral positions, so that the power is not transmitted to the countershaft 9 (to the drive wheels 3). In the power transmission state, any one of the three sleeves 19, 21, and 22 is operated to the high speed side or to the low speed side to achieve a state in which the power is transmitted, and the remaining two sleeves are located at their neutral positions. To allow the travel transmission apparatus 1 to perform the speed switching, the main clutch 7 is disconnected before the speed switching to achieve a state in which the power is not transmitted to the main shaft 8. After the speed switching, the main clutch 7 is connected again.

The three sleeves 19, 21, and 22 are provided with shift members 23, 24, and 26, respectively, for sliding the sleeves 19, 21, and 22 in the shifting direction.

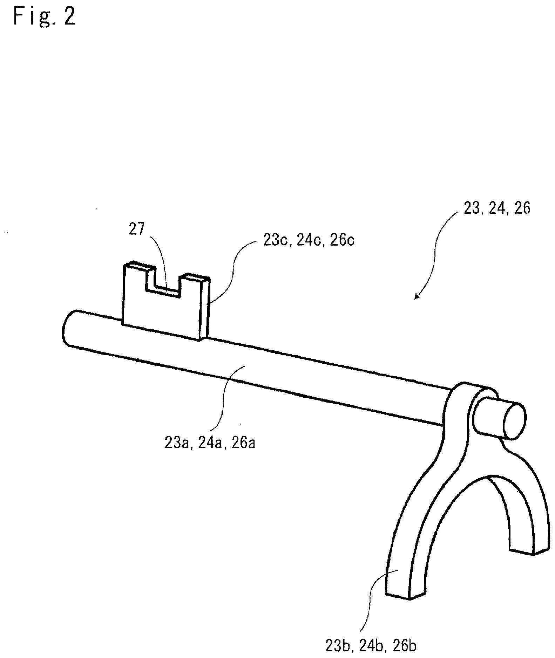

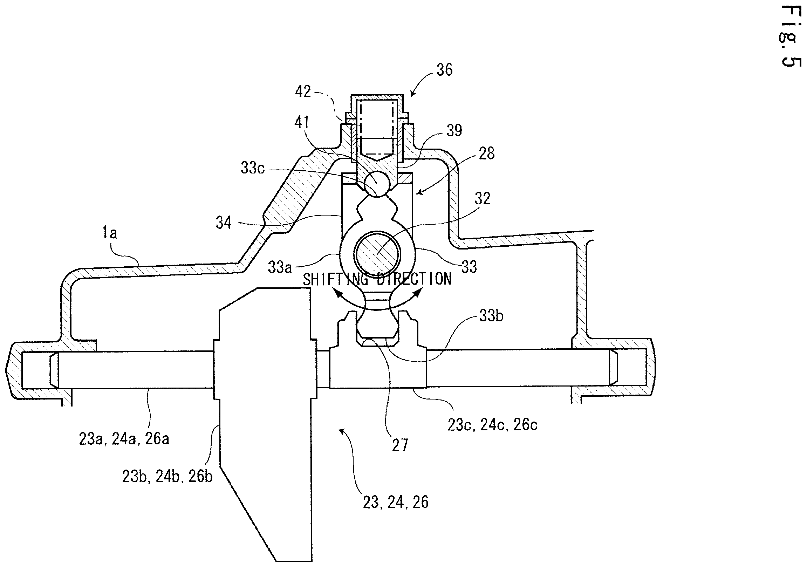

Fig. 2 is a perspective view of the shift members. The shift members 23, 24, and 26 include integrally fork shafts 23a, 24a, and 26a, shift forks 23b, 24b, and 26b, and manipulation plates 23c, 24c, and 26c, respectively. The fork shafts 23a, 24a, and 26a are formed in the shifting direction and supported slidably in their respective axial directions by a transmission casing 1a (see Fig. 5) that houses the travel gear change mechanism 11. The shift forks 23b, 24b, and 26b are provided on the fork shafts 23a, 24a, and 26a, respectively, and are each shaped like an arc when observed from each of the axial directions of the fork shafts 23a, 24a, and 26a so as to engage through the recess/protrusion structure the circumferential surfaces of the sleeves 19, 21, and 22 that are to be manipulated to slide. The manipulation plates 23c, 24c, and 26c are provided on the fork shafts 23a, 24a, and 26a, respectively, and protrude outward radially from the fork shafts 23a, 24a, and 26a, respectively. Each of the manipulation plates 23c, 24c, and 26c has at a radially protruding end (a distal end) thereof an engagement portion 27 having a substantially U shape and recessed toward a proximal end thereof.

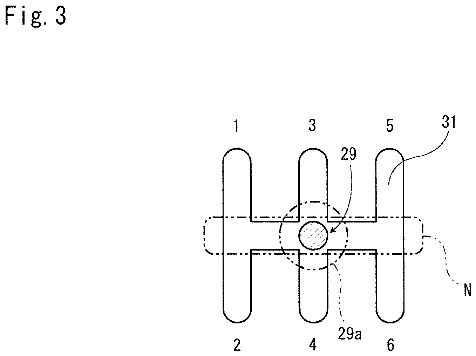

The travel transmission apparatus 1 is provided with a gear switch mechanism 28 (see Figs. 3 to 5) to perform selecting operation and shifting operation. The selecting operation is to engage with any one of the shift members 23, 24, and 26. The shifting operation is to allow the engaged one of the shift members 23, 24, and 26 to slide one of the sleeves 19, 21, and 22 that the engaged one of the shift members 23, 24, and 26 is engaged with in the shifting direction.

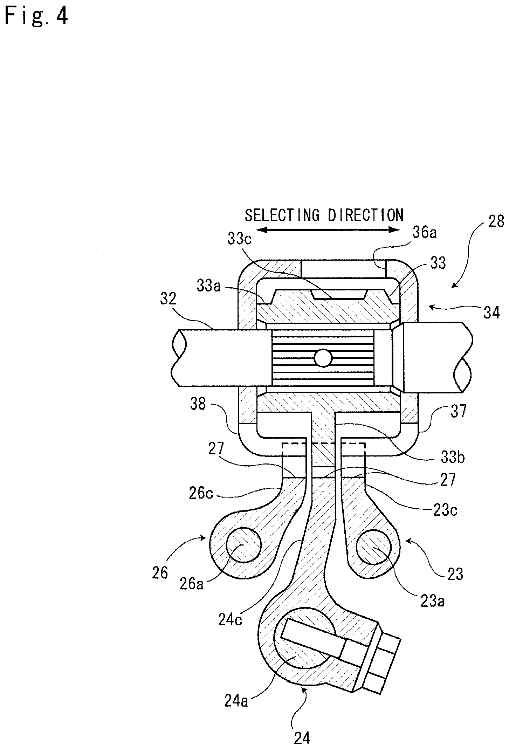

Fig. 3 is a plan view of a configuration of a shift lever. Fig. 4 is a partial sectional view for describing a configuration of the gear switch mechanism observed in the shifting direction. Fig. 5 is a partial sectional view for describing the configuration of the gear switch mechanism observed from a side orthogonal to the shifting direction.

To switch speeds from the first state to the sixth state (from a first speed to a sixth speed) in the travel transmission apparatus 1, a shift lever (a manipulator to change speed) 29 is manipulated to swing. The shift lever 29 includes at an upper end a shift knob 29a, which is a grip portion of the shift lever 29, with an intermediate portion of the shift lever 29 penetrating a guide hole 31. The guide hole 31 guides the swinging of the shift lever 29.

Specifically, manipulation to swing the shift lever 29 side to side (selecting manipulation) is enabled from a fore-and-aft neutral position.

When the shift lever 29 has been swung to the end at one side through the selecting manipulation, the shift lever 29 can be manipulated to swing fore and aft (shifting manipulation) . This shifting manipulation achieves low-speed-side shifting manipulation to switch the travel transmission apparatus 1 to any of the first state (the first speed), neutral, or the second state (a second speed) through the low-speed-side sleeve 19 and the low-speed-side shift member 23, which is the shift member engaged with the low-speed-side sleeve 19.

When the shift lever 29 has been swung to a side-to-side neutral position through the selecting manipulation, the shift lever 29 can be manipulated to swing fore and aft (the shifting manipulation). This shifting manipulation achieves medium-speed-side shifting manipulation to switch the travel transmission apparatus 1 to any of the third state (a third speed), neutral, or the fourth state (a fourth speed) through the medium-speed-side sleeve 21 and the medium-speed-side shift member 24, which is the shift member engaged with the medium-speed-side sleeve 21.

When the shift lever 29 has been swung to the end at the other side through the selecting manipulation, the shift lever 29 can be manipulated to swing fore and aft (the shifting manipulation). This shifting manipulation achieves high-speed-side shifting manipulation to switch the travel transmission apparatus 1 to any of the fifthstate (a fifth speed), neutral, or the sixth state (the sixth speed) through the high-speed-side sleeve 22 and the high-speed-side shift member 26, which is the shift member engaged with the high-speed-side sleeve 22.

In other words, during the selecting manipulation at the fore-and-aft neutral position, the travel transmission apparatus 1 is retained in the neutral state. A side-to-side swing range of the shift lever 29 for the selecting manipulation is a neutral region N.

The gear switch mechanism 28 includes a select-and-shift shaft 32, an inner lever 33, an interlock plate 34, and a lock ball mechanism 36. The select-and-shift shaft 32, which is a horizontal shaft orthogonal to the shifting direction, turns (the shifting operation) about its axis through the selecting manipulation and moves (the selecting operation) in its axial direction (a selecting direction) through the shifting manipulation. The inner lever 33, which wraps the select-and-shift shaft 32, moves in the axial direction in combination with the select-and-shift shaft 32 and turns about the axis. The interlock plate 34 is disposed so as to hold the inner lever 33 between both sides in the selecting direction.

The select-and-shift shaft 32 is supported on the transmission casing 1a so as to be able to turn about its axis and slide in the axial direction of its axis.

The inner lever 33 includes a tubular portion 33a, a lever portion 33b, and an engagement recess portion 33c. The tubular portion 33a wraps the select-and-shift shaft 32. The lever portion 33b extends from the tubular portion 33a toward the engagement portions 27 in the manipulation plates 23c, 24c, and 26c of the shift members 23, 24, and 27 (downward to be specific) . The engagement recess portion 33c is a recess formed in the tubular portion 33a at a side opposite to the lever portion 33b.

The interlock plate 34 moves in the axial direction of the select-and-shift shaft 32 in combination with the select-and-shift shaft 32, but its turning about the axis of the select-and-shift shaft 32 is blocked by the lock ball mechanism 36.

The interlock plate 34 has at its top facing the lock ball mechanism 36 a through hole 36a and at a side opposite thereto a pair of integral lock claws 37 and 38 bent so as to have the lever portion 33b of the inner lever 33 interposed therebetween at both sides in the selecting direction.

The lock ball mechanism 36 includes a moving member 39, a lock ball 41, and an elastic member 42. The moving member 39 penetrates the through hole 36a and is supported on the transmission casing 1a moveably toward and away from the select-and-shift shaft 32. The lock ball 41 is fitted in the moving member 39 at its end facing the select-and-shift shaft 32 (a distal end) and can be also fitted on the engagement recess portion 33c through the recess/protrusion structure. The elastic member 42, such as a compression spring, urges the moving member 39 toward the select-and-shift shaft 32.

The interlock plate 34 and the lock ball mechanism 36 are arranged so that the moving member 39 penetrating the through hole 36a blocks the turning of the interlock plate 34 about the axis of the select-and-shift shaft 32 and that the inner lever 33 is turned to a position at which the engagement recess portion 33c is fitted through the recess/protrusion structure on the lock ball 41 when the travel transmission apparatus 1 is in the neutral state.

Because of this, the inner lever 33 is guided to turn (turning operation) to a side at which the engagement recess portion 33c is fitted through the recess/protrusion structure on the lock ball 41 due to an urging force of the elastic member 42. To perform the travel gear ratio change to one of the speeds other than neutral, there is a need to apply a force, which is of a magnitude to overcome the urging force of the elastic member 42 to disengage the fitting of the lock ball 41 on the engagement recess portion 33c through the recess/protrusion structure, in a direction about the axis of the select-and-shift shaft 32.

In the gear switch mechanism 28 configured as described above, when the low-speed-side shifting manipulation is enabled through the selecting manipulation, the lever portion 33b is engaged with the engagement portion 27 of the low-speed-side shift member 23, allowing the low-speed-side sleeve 19 to be manipulated to slide in the shifting direction in both ways through swinging of the lever portion 33b in the shifting direction in both ways. Conversely, the moving of the other shift members 24 and 26 in the shifting direction is restricted (or blocked to be specific) by the lock claw 38 being inserted into the engagement portions 27 in the selecting direction.

When the medium-speed-side shifting manipulation is enabled through the selecting manipulation, the lever portion 33b is engaged with the engagement portion 27 of the medium-speed-side shift member 24, allowing the medium-speed-side sleeve 21 to be manipulated to slide in the shifting direction in both ways through the swinging of the lever portion 33b in the shifting direction in both ways. Conversely, the moving of the other shift members 23 and 26 in the shifting direction is restricted (or blocked to be specific) by the lock claws 37 and 38 being inserted into the engagement portions 27 in the selecting direction.

When the high-speed-side shifting manipulation is enabled through the selecting manipulation, the lever portion 33b is engaged with the engagement portion 27 of the high-speed-side shift member 26, allowing the high-speed-side sleeve 22 to be manipulated to slide in the shifting direction in both ways through the swinging of the lever portion 33b in the shifting direction in both ways. Conversely, the moving of the other shift members 23 and 24 in the shifting direction is restricted (or blocked to be specific) by the lock claw 37 being inserted into the engagement portions 27 in the selecting direction.

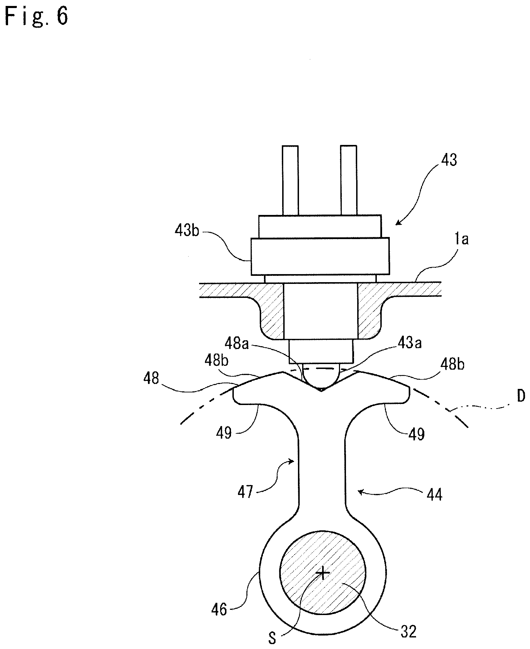

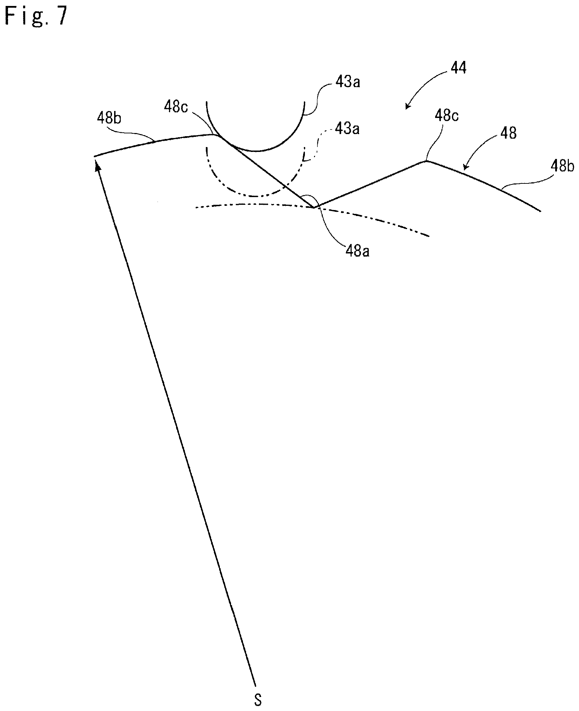

In the travel transmission apparatus 1 configured as described above, various types of control, such as engine start control, are performed by detecting the neutral state. Thus, a neutral detection switch 43 is provided to detect the neutral state of the travel gear change mechanism 11 (see Figs. 6 and 7) .

Fig. 6 is a diagram for describing a configuration of the neutral detection switch, and Fig. 7 is a diagram of a configuration of a main portion of Fig. 6. The travel transmission apparatus 1 is provided with a cam member (cam-like member) 44 and a push-button neutral detection switch 43 including and a detection body 43a. The cam member 44 performs the turning operation in conjunction with the gear change operation of the travel gear change mechanism 11 through the gear switch mechanism 28 between the first to sixth speeds . The detectionbody43a is operated to advance/retreat through contact with the cam member 44.

The cam member 44 includes integrally a tubular portion 46 and a cam portion 47 (which are formed into one piece in an example illustrated in the figure) . The tubular portion 46 wraps the select-and-shift shaft 32 to be turned about the axis of the select-and-shift shaft 32 and moved in the axial direction together with the select-and-shift shaft 32. The cam portion 47 protrudes radially from the tubular portion 46 toward the transmission casing 1a. In other words, the select-and-shift shaft 32 serves as a turning shaft for the cam member 44.

The cam portion 47 is shaped like a plate having a thickness in the shifting direction. The cam portion 47 is turned in the shifting direction through the shifting operation. The cam portion 47 has a contact edge 48, which is a protruding end (a distal end) in contact with the detection body 43a of the neutral detection switch 43. The end at the contact edge 48 has an extended portion 49 elongated in a turning direction of the cam member 44 in both ways. Because of the extended portion 49, the cam member 44 forms substantially a T-shape when observed from the axial direction of the select-and-shift shaft 32, allowing a range of the contact made with the detection body 43a by the cam member 44 during the turning to be extended.

The moving of the select-and-shift shaft 32 in the axial direction during the selecting operation entails the cam member 44 moving in the selecting direction. Thus, a thickness of the cam portion 47 is set to prevent the disengagement of the contact with the neutral detection switch 43 during the moving. Note that the cam member 44 may be supported to allow sliding relative to the select-and-shift shaft 32 in the axial direction, so that the cam member 44 does not move in the selecting direction during the selecting operation.

The contact edge 48 has at its middle in the turning direction an advance operation portion 48a, which is a wedge-shaped recess formed toward a turning pivot S of the cam member 44. The contact edge 48 also has retreat operation portions 48b, which are together shaped like an arc with the center at the turning pivot S, in areas other than the advance operation portion 48a. Due to the configuration described above, the retreat operation portions 48b are arranged at both sides of the advance operation portion 48a in the turning direction. A connection portion 48c between any one of the retreat operation portions 48b and the advance operation portion 48a is rounded to provide a smooth connection therebetween.

The wedge-shaped bottom of the advance operation portion 48a may also be rounded, although the bottom is shaped to have an obtuse angle in the illustrated example.

The neutral detection switch 43 is oriented in a radial direction of an arc-like movement track D of the cam member 44 with the detection body 43a facing the cam member 44. A switch body 43b of the neutral detection switch 43 is secured to the transmission casing 1a. Thus, the direction of reciprocating operation of the detection body 43a is directed to the radial direction of the arc-like movement track D. The direction of the reciprocating operation is the direction of the advancing/retreating to/from the cam member 44.

The detection body 43a is shaped like a cylinder extending in the advancing/retreating direction. The detection body 43a has an end (a distal end) facing the cam member 44 and shaped like a hemisphere accommodated or substantially accommodated in the wedge-shaped recess of the advance operation portion 48a to be fitted therein. This hemispherical portion is in contact with the cam member 44.

Conversely, with such a configuration, the advance operation portion 48a is rendered recessed in a wedge shape at the side of the advancing of the detection body 43a. Thus, the detection body 43a is operated to advance when in contact with the advance operation portion 48a. In comparison with the advance operation portion 48a, the retreat operation portions 48b are located at the side of the retreating of the detection body 43a. Thus, the detection body 43a is operated to retreat when in contact with any one of the retreat operation portions 48b.

The cam member 44 and the neutral detection switch 43 are arranged so that, in the neutral state in which the selecting manipulation is enabled, the hemispherical portion of the detection body 43a achieves a maximum advance to come into contact with the bottom of the advance operation portion 48a, which is a wedge-shaped recess of the cam member 44. The cam member 44 and the neutral detection switch 43 are also arranged so that, after the shifting operation out of the neutral state into any other state, the hemispherical portion of the detection body 43a comes into contact with an intermediate portion of the advance operation portion 48a other than the bottom to be operated to retreat partway, or the hemispherical portion of the detection body 43a comes into contact with one of the retreat operation portions 48b to achieve a maximum retreat operation.

In this example, the advance operation of the detection body 43a allows the neutral detection switch 43 to turn ON, whereas the retreat operation of the detection body 43a allows the neutral detection switch 43 to turn OFF. By determining whether the neutral detection switch 43 is ON or OFF, it can be determined whether or not the travel gear change mechanism 11 is in the neutral state.

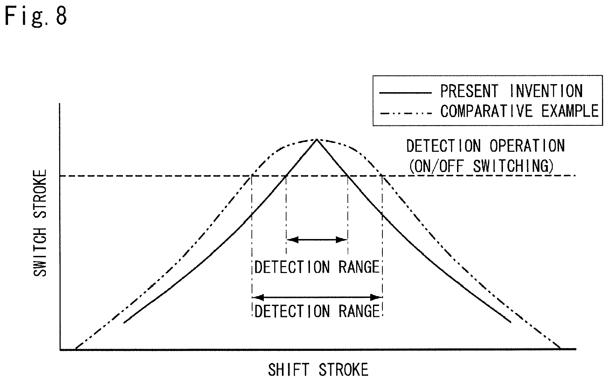

Fig. 8 is a characteristic graph of a cam member to which the invention is applied, in comparison with a conventional and publicly known protruding cam member. The graph has a comparative example that uses the identical configuration except the cam member with a contact edge shaped to protrude like an arc. In the characteristic graph, turning quantities (shift strokes) of the cam members during the shifting operation and moving quantities (switch strokes) of the detection bodies in the advancing/retreating direction are compared between the invention and the comparative example.

As illustrated in the graph, the invention has a detection range, which is a range in which the neutral state of the travel gear change mechanism 11 is detected by the neutral detection switch 43, narrower than that of the comparative example. Thus, the invention can provide the detection of the neutral state with small variability and high accuracy.

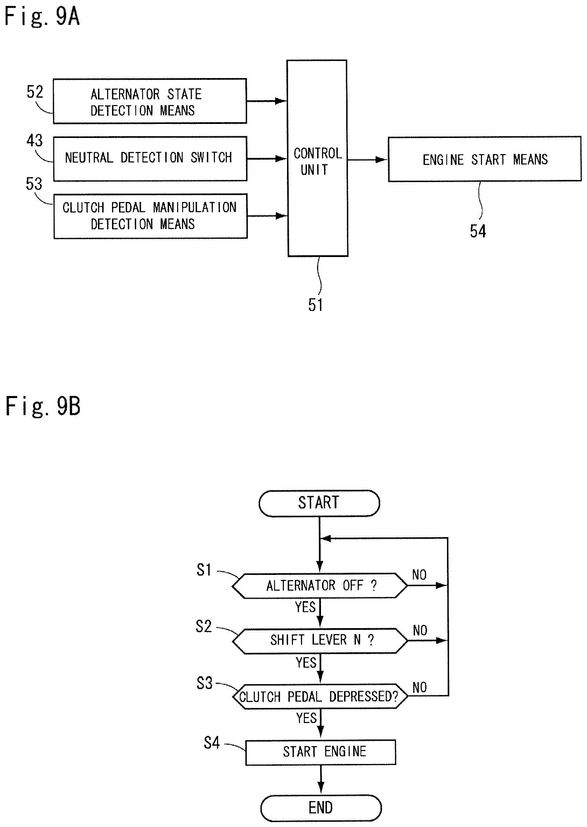

Fig. 9A is a block diagram of a control unit installed in a four wheel vehicle to which the invention is applied. Fig. 9B is a flowchart of processing of the control unit. The neutral detection switch 43 and the cam member 44 described above can be used to perform engine start control for idling stop. A control unit 51, which includes a microcomputer and the like, is connected at its input side to the neutral detection switch 43, an alternator state detection means 52, and a clutch pedal manipulation detection means 53. The alternator state detection means 52 is for detecting a power generation state with the engine 2 driven. The clutch pedal manipulation detection means 53 is for detecting connection/disconnection manipulation of a clutch pedal that performs the connection/disconnection manipulation of the main clutch 7. The control unit 51 is also connected at its output side to an engine start means 54, which includes a spark plug and the like, for starting the engine 2.

Once the processing is started for the control unit 51, the flowchart proceeds to step S1. In step S1, the alternator state detection means 52 determines whether or not the alternator is in the power generation state with the engine power. If the alternator is not in the power generation state, it is assumed that the engine 2 is stopped being driven and the flowchart proceeds to step S2. Otherwise, the processing in step S1 is performed again.

In step S2, the neutral detection switch 43 determines whether or not the travel gear change mechanism 11 is in the neutral state. If the travel gear change mechanism 11 is not in the neutral state, starting the engine 2 is likely to cause the power to be transmitted to the drive wheels 3 inadvertently, and thus the flowchart reverts back to step S1. If the travel gear change mechanism 11 is in the neutral state, it is likely that the engine 2 can be started, and the flowchart proceeds to step S3.

In step S3, the clutch pedal manipulation detection means 53 detects the manipulation of the clutch pedal to determine whether or not the main clutch 7 is disconnect so that the engine power is not transmitted to the travel gear change mechanism 11. If the main clutch 7 is disconnected, it is judged that the engine 2 can be started, and the flowchart proceeds to step S4. Otherwise, it is judged that it is not desirable to start the engine 2, and the flowchart reverts back to step S1. In step S4, the engine start means 54 starts the engine 2, which finishes the processing.

Such engine start control can be performed in a smooth and reliable manner due to the high accuracy of the neutral detection.

### Reference Signs List

- 1: Travel transmission apparatus
- 11: Travel gear change mechanism (gear change mechanism)
- 32: Select-and-shift shaft (turning shaft)
- 43: Neutral detection switch
- 43a: Detection body
- 44: Cam-like member
- 48: Contact edge
- 48a: Advance operation portion
- 48b: Retreat operation portion
- 48c: Connection portion

## Claims

1. A travel transmission apparatus (1) that uses a neutral detection switch (43) to detect a neutral state of a gear change mechanism (11), comprising:
a cam-like member (44) configured to be turned in conjunction with gear change operation of the gear change mechanism (11); wherein
the cam-like member (44) is shaped like a plate protruding outward radially from a turning shaft thereof, and
the cam-like member (44) having a plate-like shape is shaped to have a radially outer width larger than a radially inner width; and
the neutral detection switch (43) configured to be of a push-button type and to allow a detection body (43a) to advance/retreat so that ON/OFF operation is performed to detect the neutral state of the gear change mechanism (11), wherein
the cam-like member (44) has a contact edge (48) formed to be in contact with the detection body (43a) so that the detection body (43a) is operated to advance/retreat when the cam-like member (44) is turned, and
the contact edge (48) has an advance operation portion (48a) rendered recessed in a wedge shape at a side of the advancing so that the detection body (43a) of the neutral detection switch (43) is operated to advance to come into contact with the advance operation portion (48a) when the gear change mechanism (11) is switched to neutral,
**characterized in that**
portions of the contact edge (48) other than the advance operation portion (48a) are retreat operation portions (48b) shaped like an arc with a center at a turning pivot of the cam-like member (44) so that the detection body (43a) of the neutral detection switch (43) comes in contact with any one of the retreat operation portions (48b) when the detection body (43a) is retreated, and
the turning shaft of the cam-like member (44) is a select-and-shift shaft (32) that turns about an axis thereof to allow the gear change mechanism (11) to perform the gear change operation and moves in an axial direction to perform selecting operation in which a shift fork to be engaged is selected.

2. The travel transmission apparatus (1) according to claim 1, wherein a connection portion (48c) between any of the retreat operation portions (48b) and the advance operation portion (48a) is rounded.

3. The travel transmission apparatus (1) according to any one of claims 1 to 2, wherein the detection body (43a) of the neutral detection switch (43) has a distal end shaped like a hemisphere fitted in the wedge-shaped advance operation portion (48a).

## Patentansprüche

1. Fahrgetriebevorrichtung (1), die einen Neutralerkennungsschalter (43) verwendet, um eine Neutralstellung eines Gangwechselmechanismus (11) zu erfassen, mit:
einem nockenartigen Element (44), das ausgebildet ist, bei einem Gangwechselvorgang des Gangwechselmechanismus (11) gedreht zu werden, wobei
das nockenartige Element (44) wie eine Platte geformt ist, die aus einer Drehachse davon radial nach außen hervorsteht, und
das nockenartige Element (44) mit plattenartiger Form so geformt ist, dass es eine radial nach außen gerichtete äußere Breite hat, die größer ist als eine radial einwärts gerichtete innere Breite; und
der Neutralerkennungsschalter (43) als ein Druckknopf ausgebildet ist und es ermöglicht, dass ein Detektierteil (43a) so ausfahrbar/einfahrbar ist, dass eine EIN/AUS-Betätigung zum Erfassen des Neutralzustands des Gangwechselmechanismus (11) ausgeführt wird, wobei
das nockenartige Element (44) eine Kontaktkante (48) aufweist, die so ausgebildet ist, dass sie mit dem Detektierteil (43a) derart in Kontakt ist, dass das Detektierteil (43a) zum Ausfahren/Einfahren betätigt wird, wenn das nockenartige Element (44) gedreht wird, und
die Kontaktkante (48) einen Ausfahrbetätigungsbereich (48a) hat, der in einer Keilform auf einer Seite des Ausfahrens derart ausgespart ist, dass das Detektierteil (43a) des Neutralerkennungsschalters (43) für ein Ausfahren so betätigt wird, dass es mit dem Ausfahrbetätigungsbereich (48a) in Kontakt tritt, wenn der Gangwechselmechanismus (11) auf neutral geschaltet wird,
**dadurch gekennzeichnet, dass**
Bereiche der Kontaktkante (48), die nicht der Ausfahrbetätigungsbereich (48) sind, Einfahrbetätigungsbereiche (48b) sind, die bogenförmig geformt sind mit einem Mittelpunkt an einem Drehpunkt des nockenartigen Elements (44) derart, dass das Detektierteil (43a) des Neutralerkennungsschalters (43) mit jedem der Einfahrbetätigungsbereiche (48b) in Kontakt tritt, wenn das Detektierteil (43a) einfährt und
die Drehachse des nockenartigen Elements (44) eine Auswählen-und-Betätigen-Welle (32) ist, die sich um ihre Achse dreht, so dass der Gangwechselmechanismus (11) den Gangwechselvorgang ausführen kann und sich zur Ausführung des Auswählens in axialer Richtung bewegt, so dass eine in Eingriff zu bringende Schaltgabel ausgewählt wird.

2. Fahrgetriebevorrichtung (1) nach Anspruch 1, wobei ein Verbindungsbereich (48c) zwischen einem der Einfahrbetätigungsbereiche (48b) und dem Ausfahrbetätigungsbereich (48a) abgerundet ist.

3. Fahrgetriebevorrichtung (1) nach Anspruch 1 oder 2, wobei das Detektierteil (43a) des Neutralerkennungsschalters (43) ein distales Ende hat, das wie eine Halbkugel geformt ist, die in den keilförmigen Ausfahrbetätigungsbereich (48a) eingepasst ist.

## Revendications

1. Appareil de transmission à déplacement (1) qui utilise un commutateur de détection de point mort (43) pour détecter un point mort d'un mécanisme de changement de vitesse (11), comprenant :
un élément de type came (44) configuré pour être tourné conjointement avec une opération de changement de vitesse du mécanisme de changement de vitesse (11) ; dans lequel
l'élément de type came (44) est formé en forme de plaque faisant saillie vers l'extérieur radialement depuis un arbre tournant de celui-ci, et
l'élément de type came (44) ayant une forme de plaque est formé de façon à avoir une largeur radialement externe supérieure à une largeur radialement interne ; et
le commutateur de détection de point mort (43) est configuré de façon à être de type bouton-poussoir et permettre à un corps de détection (43a) d'avancer/reculer de sorte qu'une opération de MARCHE/ARRÊT soit effectuée pour détecter le poids mort du mécanisme de changement de vitesse (11), dans lequel
l'élément de type came (44) comporte un bord de contact (48) formé de façon à être en contact avec le corps de détection (43a) de sorte que le corps de détection (43a) soit actionné pour avancer/reculer lorsque l'élément de type came (44) est tourné, et
le bord de contact (48) comporte une partie d'opération d'avancement (48a) rendue évidée en forme de coin sur un côté d'avancement de sorte que le corps de détection (43a) du commutateur de détection de point mort (43) soit actionné pour avancer de façon à venir en contact avec la partie d'opération d'avancement (48a) lorsque le mécanisme de changement de vitesse (11) est commuté au point mort, **caractérisé en ce que**
des parties du bord de contact (48) autres que la partie d'opération d'avancement (48a) sont des parties d'opération de recul (48b) en forme d'arc avec un centre à un pivot tournant de l'élément de type came (44) de sorte que le corps de détection (43a) du commutateur de détection de point mort (43) vienne en contact avec l'une quelconque des parties d'opération de recul (48b) lorsque le corps de détection (43a) est reculé, et
l'arbre tournant de l'élément de type came (44) est un arbre de type sélectionner-déplacer (32) qui tourne autour d'un axe de celui-ci pour permettre au mécanisme de changement de vitesse (11) d'effectuer l'opération de changement de vitesse et se déplace dans une direction axiale pour effectuer une opération de sélection dans laquelle une fourchette devant être mise en prise est sélectionnée.

2. Appareil de transmission à déplacement (1) selon la revendication 1, dans lequel une partie de raccordement (48c) entre l'une quelconque des parties d'opération de recul (48b) et de la partie d'opération d'avancement (48a) est arrondie.

3. Appareil de transmission à déplacement (1) selon l'une quelconque des revendications 1 à 2, dans lequel le corps de détection (43a) du commutateur de détection de point mort (43) a une extrémité distale en forme d'hémisphère ajustée dans la partie d'opération d'avancement en forme de coin (48a).
